# EUROPEAN PATENT APPLICATION

(11) **EP 3 200 433 A1**
(43) Date of publication of application: **02.08.2017**
(21) Application number: 14884580.3
(22) Date of filing: 24.11.2014
(51) Int. Cl.: H04L 29/12

(54) **IPV6 ADDRESS MANAGEMENT METHOD, DEVICE AND TERMINAL**

(30) Priority: 24.09.2014 CN 201410495296
(71) Applicant: ZTE Corporation, Shenzhen, Guangdong 518057 (CN)
(72) Inventor: LUO, Jian, Shenzhen Guangdong 518057 (CN); FAN, Liang, Shenzhen Guangdong 518057 (CN); ZHU, Chengxu, Shenzhen Guangdong 518057 (CN); YUAN, Bo, Shenzhen Guangdong 518057 (CN)
(74) Representative: Novagraaf Technologies
(86) International application number: PCT/CN2014/092087
(87) International publication number: WO 2015/131567

(57) **Abstract**

The disclosure discloses a method and device for managing an Internet Protocol version 6 (IPv6) address, and a terminal. The method includes that: when a first service has yet not ended before an original lifetime of a first IPv6 address terminates, a first terminal sends an address updating request message for querying about whether or not the first service supports IPv6 address updating to a second terminal; the first terminal receives an address updating response message returned by the second terminal; when a first determination result carried in the address updating response message indicates that the first service supports IPv6 address updating, the first terminal requests to establish a backup session for the first service with the second terminal by virtue of a second IPv6 address, which is pre-stored; and in the case that the first service has yet not ended when the original lifetime of the first IPv6 address terminates, the first terminal continues executing the first service with the second terminal by virtue of the backup session.

## Description

### Technical Field

The disclosure relates to, but not limited to, the field of communications, and in particular to a method and device for managing an Internet Protocol Version 6 (IPv6) address, and a terminal.

### Background

Along with rapid popularization of an Internet and rapid development of a data communication technology, a global number of Internet Protocol (IP) terminals sharply increase. At present, Internet Protocol version 4 (IPv4) public network addresses have been exhausted, and a Network Address Translation (NAT) technology has many performance and application layer supporting problems. Therefore, popularization of an IPv6 technology with larger coding lengths and more address spaces is an important issue imperative for operating companies and users throughout the world.

Like an IPv4 network, for an IPv6 network, network security is also an important subject. A host computer in a network may be scanned to find information such as an IP address adopted by an active host computer, an open port and an adopted operating system. This information is necessary for network management because it is a premise for network intrusion of a malicious attacker and is also an essential part in a worm propagation process. Therefore, researches on a network scanning technology are significant for the network security.

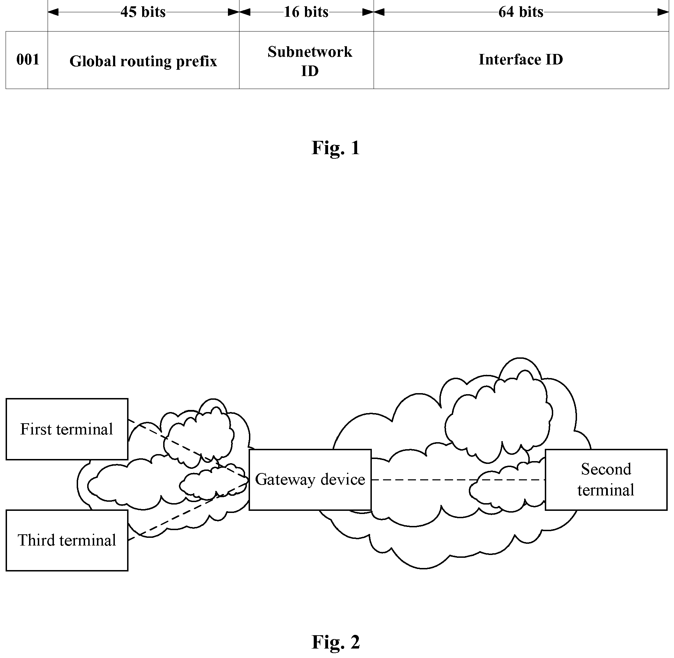

As shown in Fig. 1, in a structure of a global unicast address, first 64 bits form a network prefix, including three parts, i.e. "001", a global routing prefix and a subnetwork Identity (ID), and a router on the Internet transmits a data packet to a link where a host computer is located through the global unicast address; and latter 64 bits form an interface ID arranged to distinguish different host computers in the same link. The interface ID is usually generated by the host computer through a Media Access Control (MAC) address or other information of the host computer, and the prefix is allocated to the host computer through network device (for example, a broadband gateway). During consideration about that an attacker performs network address scanning on a host computer of a user, it is supposed that a network prefix of a link has been obtained from a known address of the host computer, that is, first 64 bits in the known address of the host computer have been known by a scanner (the attacker), scanning is performed for latter 64 bits in the known address, that is, an interface ID in the known address is scanned.

For above-mentioned problem, an existing technical solution is to upgrade a terminal and network device to support a so-called IP address frequency hopping (or called IP address hopping) technology to enable the host computer of the user to switch an address of the host computer to achieve a purpose of avoiding address scanning as much as possible according to a certain rate, and includes two methods of switching an interface ID formed by latter 64 bits and first 64 bits (i.e. 64-bit IPv6 prefix), in which the interface ID may be synchronously switched at the same time when a prefix is switched.

The IP address frequency hopping technology may certainly solve an address scanning problem to a certain extent, but also brings a new problem, such as a problem about service continuity after hopping. That is, an IPv6 address change interrupts an online service to influence service experiences of an interrupted user.

### Summary

Embodiments of the disclosure provide a method and device for managing an IPv6 address, and a terminal, to achieve user service continuity after IPv6 hopping and improve security and availability of an IPv6 network.

In an embodiment of the disclosure, a method for managing an IPv6 address may be applied to a first terminal, and the method may include that:
when a first service has yet not ended before an original lifetime of a first IPv6 address terminates, sending, by the first terminal, an address updating request message for querying about whether or not the first service supports IPv6 address updating to a second terminal, wherein the first service is a service which is currently executed by the first terminal and the second terminal, and the first IPv6 address is an IPv6 address adopted for the first service which is currently executed by the first terminal; receiving, by the first terminal, an address updating response message returned by the second terminal, the address updating response message carrying a first determination result of a determination of the second terminal about whether or not the first service supports IPv6 address updating; when the first determination result carried in the address updating response message indicates that the first service supports IPv6 address updating, requesting, by the first terminal, to establish a backup session for the first service with the second terminal by virtue of a second IPv6 address, which is pre-stored; and in the case that the first service has yet not ended when the original lifetime of the first IPv6 address terminates, continuing executing, by the first terminal, the first service with the second terminal by virtue of the backup session.

In an example embodiment, the first IPv6 address is at least one of a 128-bit IPv6 address and a 64-bit IPv6 address prefix.

In an example embodiment, sending, by the first terminal, the address updating request message for querying about whether or not the first service supports the IPv6 address updating to the second terminal includes: sending, by the first terminal, the address updating request message to the second terminal through an IPv6 extension header.

In an example embodiment, the address updating request message carries at least one of an IPv6 address updating capability parameter of the first terminal and the second IPv6 address.

In an example embodiment, the IPv6 address updating capability parameter includes at least one of an IPv6 address prefix updating capability parameter and an IPv6 interface Identity (ID) updating capability parameter.

In another embodiment of the disclosure, a method for managing an IPv6 address is provided, which may be applied to a second terminal, the method including that:
receiving an address updating request message for querying about whether or not a first service supports IPv6 address updating from a first terminal, wherein the first service is a service which is currently executed by the first terminal and the second terminal, the first service has yet not ended before an original lifetime of a first IPv6 address terminates, and the first IPv6 address is an IPv6 address adopted for the first service which is currently executed by the first terminal; determining whether or not the first service supports the IPv6 address updating to obtain a first determination result; and when the first determination result indicates that the first service supports the IPv6 address updating, returning an address updating response message carrying the first determination result to the first terminal so that the first terminal requests to establish a backup session for the first service with the second terminal by virtue of a second IPv6 address, which is pre-stored, and continue executing the first service with the second terminal by virtue of the backup session in the case that the first service has yet not ended when the original lifetime of the first IPv6 address terminates.

In an example embodiment, the device further includes: determining, by the second terminal, whether or not the address updating request message is recognized to obtain a second determination result, and determining whether or not the first service supports the IPv6 address updating to obtain the first determination result includes: when the second determination result indicates that the address updating request message is recognized, determining whether or not the first service supports the IPv6 address updating to obtain the first determination result.

In another embodiment of the disclosure, a device for managing an IPv6 address is provided, which may be applied to a first terminal, the device including: a first sending component, arranged to, when a first service has yet not ended before an original lifetime of a first IPv6 address terminates, send an address updating request message for querying about whether or not the first service supports IPv6 address updating to a second terminal, wherein the first service is a service which is currently executed by the first terminal and the second terminal, and the first IPv6 address is an IPv6 address adopted for the first service which is currently executed by the first terminal; a first receiving component, arranged to receive an address updating response message returned by the second terminal, the address updating response message carrying a first determination result of a determination of the second terminal about whether or not the first service supports IPv6 address updating; a backup session establishment component, arranged to, when the first determination result carried in the address updating response message indicates that the first service supports IPv6 address updating, request to establish a backup session for the first service with the second terminal by virtue of a second IPv6 address, which is pre-stored; and a processing component, arranged to, in the case that the first service has yet not ended when the original lifetime of the first IPv6 address terminates, continue executing the first service with the second terminal by virtue of the backup session.

In an example embodiment, the first IPv6 address is at least one of a 128-bit IPv6 address and a 64-bit IPv6 address prefix.

In an example embodiment, the first sending component includes: a first sending sub-component, arranged to send the address updating request message to the second terminal through an IPv6 extension header.

In an example embodiment, the address updating request message carries at least one of an IPv6 address updating capability parameter of the first terminal and the second IPv6 address.

In an example embodiment, an IPv6 address updating capability parameter includes at least one of an IPv6 address prefix updating capability parameter and an IPv6 interface Identity (ID) updating capability parameter.

In another embodiment of the disclosure, a device for managing an IPv6 address is provided, which may be applied to a second terminal, the device including:
a second receiving component, arranged to receive an address updating request message for querying about whether or not a first service supports IPv6 address updating from a first terminal, wherein the first service is a service which is currently executed by the first terminal and the second terminal, the first service has yet not ended before an original lifetime of a first IPv6 address terminates, and the first IPv6 address is an IPv6 address adopted for the first service which is currently executed by the first terminal; a first determination component, arranged to judge whether or not the first service supports the IPv6 address updating to obtain a first determination result; and a second sending component, arranged to, when the first determination result indicates that the first service supports the IPv6 address updating, return an address updating response message carrying the first determination result to the first terminal so that the first terminal requests to establish a backup session for the first service with the second terminal by virtue of a second IPv6 address, which is pre-stored, and continue executing the first service with the second terminal by virtue of the backup session in the case that the first service has yet not ended when the original lifetime of the first IPv6 address terminates.

In an example embodiment, the device further includes: a second determination component, arranged to judge whether or not the address updating request message is recognized to obtain a second determination result, and the first determination component is arranged to: when the second determination result indicates that the address updating request message is recognized, determine whether or not the first service supports the IPv6 address updating to obtain the first determination result.

In another embodiment of the disclosure, a terminal is provided, which may include above-mentioned device for managing the IPv6 address applied to the first terminal.

In another embodiment of the disclosure, a terminal is provided, which may include above-mentioned device for managing the IPv6 address applied to the second terminal.

In another embodiment of the disclosure, a computer program is provided, which may include a program instruction, the program instruction being executed by a terminal to cause a computer to execute the abovementioned method.

In another embodiment of the disclosure, a computer-readable storage medium carrying the computer program is provided.

In the embodiments of the disclosure, the terminal and network device are improved to deploy the IPv6 address updating, thereby achieving user service continuity after IPv6 hopping, improving security and availability of an IPv6 network and achieving a positive effect on acceleration of IPv6 network deployment.

### Brief Description of the Drawings

Fig. 1 is a schematic diagram of an IPv6 address structure according to the related art;
Fig. 2 is a schematic diagram of a network topology according to an embodiment of the disclosure;
Fig. 3 is a flowchart of a method for managing an IPv6 address according to an embodiment of the disclosure;
Fig. 4 is an interaction flowchart of a method for managing an IPv6 address according to an embodiment of the disclosure;
Fig. 5 is a structural block diagram of a device for managing an IPv6 address applied to a first terminal according to an embodiment of the disclosure;
Fig. 6 is a structural block diagram of a device for managing an IPv6 address applied to a second terminal according to an embodiment of the disclosure; and
Fig. 7 is a schematic diagram of component interaction between terminals according to an embodiment of the disclosure.

### Detailed Description

In order to make the technical problem to be solved, technical solutions and advantages of the embodiments of the disclosure clearer, detailed descriptions will be made below with reference to the drawings and specific embodiments.

In the embodiments of the disclosure, IPv6 address updating is alternatively deployed to achieve user service continuity after IPv6 hopping. A specific implementation manner is as follows.

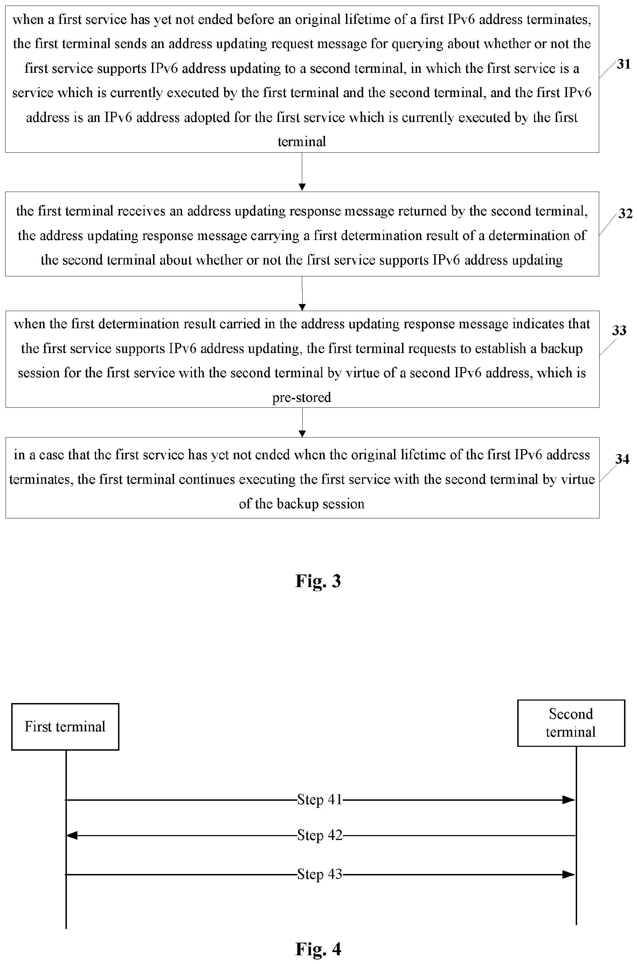

One embodiment of the disclosure provides a method for managing an IPv6 address , which is applied to a first terminal. The method, as shown in Fig. 3, includes the following steps.

Step 31: when a first service has yet not ended before an original lifetime of a first IPv6 address terminates, the first terminal sends an address updating request message for querying about whether or not the first service supports IPv6 address updating to a second terminal, in which the first service is a service which is currently executed by the first terminal and the second terminal, and the first IPv6 address is an IPv6 address adopted for the first service which is currently executed by the first terminal;

Step 32: the first terminal receives an address updating response message returned by the second terminal, the address updating response message carrying a first determination result of a determination of the second terminal about whether or not the first service supports IPv6 address updating;

Step 33: when the first determination result carried in the address updating response message indicates that the first service supports IPv6 address updating, the first terminal requests to establish a backup session for the first service with the second terminal by virtue of a second IPv6 address, which is pre-stored; and

Step 34: in the case that the first service has yet not ended when the original lifetime of the first IPv6 address terminates, the first terminal continues executing the first service with the second terminal by virtue of the backup session.

When the current first service supports IPv6 address updating, the first terminal establishes the backup session for the first service with the second terminal in advance by virtue of the second IPv6 address, which is pre-stored, and when the original lifetime of the second IPv6 address terminates, the first terminal continues executing the first service with the second terminal by virtue of the backup session to achieve user service continuity after IPv6 hopping.

Moreover, the first IPv6 address is at least one of a 128-bit IPv6 address and a 64-bit IPv6 address prefix.

Alternatively, the first terminal may send the address updating request message to the second terminal through an IPv6 extension header. Furthermore, for facilitating the determination of the second terminal about whether or not the first service supports the IPv6 address updating, the address updating request message alternatively carries at least one of an IPv6 address updating capability parameter of the first terminal and the second IPv6 address. The IPv6 address updating capability parameter includes at least one of an IPv6 address prefix updating capability parameter and an IPv6 interface ID updating capability parameter.

Correspondingly, a method for managing an IPv6 address applied to the second terminal includes that:
the second terminal receives an address updating request message for querying about whether or not a first service supports IPv6 address updating from a first terminal, in which the first service is a service which is currently executed by the first terminal and the second terminal, the first service has yet not ended before an original lifetime of a first IPv6 address terminates, and the first IPv6 address is an IPv6 address adopted for the first service which is currently executed by the first terminal;
the second terminal determined whether or not the first service supports the IPv6 address updating to obtain a first determination result; and
when the first determination result indicates that the first service supports IPv6 address updating, the second terminal returns an address updating response message carrying the first determination result to the first terminal so that the first terminal requests to establish a backup session for the first service with the second terminal by virtue of a second IPv6 address, which is pre-stored, and continue executing the first service with the second terminal by virtue of the backup session in the case that the first service has yet not ended when the original lifetime of the first IPv6 address terminates.

When determining that the first service supports the IPv6 address updating, the second terminal may return the address updating response message carrying the first determination result to the first terminal in order to enable the first terminal establish the backup session for the first service with the second terminal by virtue of the second IPv6 address, which is pre-stored. In the case that the first service has yet not ended when the original lifetime of the first IPv6 address terminates, the first terminal may continue executing the first service with the second terminal by virtue of the established backup session to achieve user service continuity after IPv6 hopping to achieve the purpose of the disclosure.

Alternatively, the second terminal is required to determine whether or not the first service supports the IPv6 address updating on a basis that the address updating request message may be recognized. That is, the method further includes that:
the second terminal determines whether or not the address updating request message may be recognized to obtain a second determination result; and
the step that whether or not the first service supports the IPv6 address updating is determined to obtain the first determination result is specifically implemented as follows:
   when the second determination result indicates that the address updating request message may be recognized, the second terminal determines whether or not the first service supports the IPv6 address updating to obtain the first determination result.

Detailed descriptions about the abovementioned processes will be made below with reference to Fig. 2 and Fig. 4. The following specific steps are included.

Step 41: a first terminal sends an address updating request message to an opposite host computer of a Transmission Control Protocol/User Datagram Protocol (TCP/UDP) connection adopting a first IPv6 address, i.e. a second terminal which executes a first service with the first terminal, before a lifetime of the first IPv6 address terminates, and an IPv6 address updating capability parameter and/or a second IPv6 address are carried in the address updating request message.

Alternatively, the first IPv6 address is an IPv6 address currently adopted for the current first service of the first terminal.

Alternatively, the first IPv6 address is at least one of a 128-bit IPv6 address and a 64-bit IPv6 address prefix.

Alternatively, the address updating capability parameter includes an interface ID updating capability parameter and/or an IPv6 prefix updating capability parameter.

Step 42: after receiving the address updating request message from the first terminal, when the message may be recognized, the second terminal returns an IPv6 address updating response message to the first terminal to notify whether or not the first service corresponding to the TCP/UDP connection supports an updating behavior, and Step 43 is executed when the first service corresponding to the TCP/UDP connection supports the updating behavior.

Alternatively, the IPv6 address updating request message and the IPv6 address updating response message are both implemented through an IPv6 extension header.

Step 43: the first terminal sends a backup session establishment request carrying the second IPv6 address to the second terminal of the TCP/UDP connection adopting the first IPv6 address.

Alternatively, after the first terminal and the second terminal successfully establish a backup session, the first terminal closes an original session and starts a new session to maintain an original connection state when the lifetime of the first IPv6 address terminates.

In the process of the embodiment of the disclosure, for achieving user service continuity after IPv6 hopping, the IPv6 address updating is considered, when the first service supports the IPv6 address updating, the first terminal establishes the backup session with the second terminal by virtue of the second pre-stored IPv6 address, and when the original lifetime of the first IPv6 address terminates, the first terminal continues executing the first service with the second terminal by virtue of the backup session, so that the service continuity after IPv6 address hopping is achieved, security and availability of an IPv6 network are improved, and a positive effect on acceleration of IPv6 network deployment is achieved.

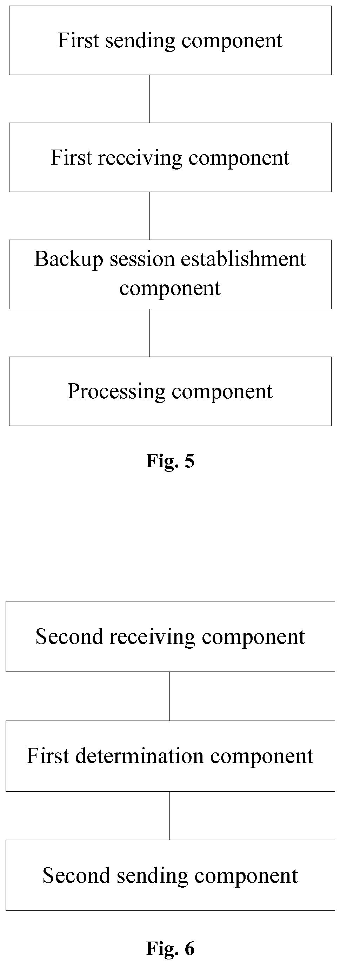

Another embodiment of the disclosure further provides a device for managing an IPv6 address, which is applied to a first terminal. The device, as shown in Fig. 5, includes:
a first sending component, arranged to, when a first service has yet not ended before an original lifetime of a first IPv6 address terminates, send an address updating request message for querying about whether or not the first service supports IPv6 address updating to a second terminal, wherein the first service is a service which is currently executed by the first terminal and the second terminal, and the first IPv6 address is an IPv6 address adopted for the first service which is currently executed by the first terminal;
a first receiving component, arranged to receive an address updating response message returned by the second terminal, the address updating response message carrying a first determination result of a determination of the second terminal about whether or not the first service supports IPv6 address updating;
a backup session establishment component, arranged to, when the first determination result carried in the address updating response message indicates that the first service supports IPv6 address updating, request to establish a backup session for the first service with the second terminal by virtue of a second IPv6 address, which is pre-stored; and
a processing component, arranged to, if the first service has yet not ended when the original lifetime of the first IPv6 address terminates, continue executing the first service with the second terminal by virtue of the backup session.

In the IPv6 address management device, the first IPv6 address may be at least one of a 128-bit IPv6 address and a 64-bit IPv6 address prefix.

In the IPv6 address management device, the first sending component may include:
a first sending sub-component, arranged to send the address updating request message to the second terminal through an IPv6 extension header.

In the IPv6 address management device, the address updating request message may carry at least one of an IPv6 address updating capability parameter of the first terminal and the second IPv6 address.

In the IPv6 address management device, the IPv6 address updating capability parameter includes at least one of an IPv6 address prefix updating capability parameter and an IPv6 interface ID updating capability parameter.

Another embodiment of the disclosure further provides a device for managing an IPv6 address, which is applied to a second terminal. The device, as shown in Fig. 6, includes:
a second receiving component, arranged to receive an address updating request message for querying about whether or not a first service supports IPv6 address updating from a first terminal, wherein the first service is a service which is currently executed by the first terminal and the second terminal, the first service has yet not ended before an original lifetime of a first IPv6 address terminates, and the first IPv6 address is an IPv6 address adopted for the first service which is currently executed by the first terminal;
a first determination component, arranged to judge whether or not the first service supports IPv6 address updating to obtain a first determination result; and
a second sending component, arranged to, when the first determination result indicates that the first service supports the IPv6 address updating, return an address updating response message carrying the first determination result to the first terminal so that the first terminal requests to establish a backup session for the first service with the second terminal by virtue of a second IPv6 address, which is pre-stored, and continue executing the first service with the second terminal by virtue of the backup session in the case that the first service has yet not ended when the original lifetime of the first IPv6 address terminates.

The IPv6 address management device may further include:
a second determination component, arranged to judge whether or not the address updating request message may be recognized to obtain a second determination result; and
the first determination component may be arranged to:
   when the second determination result indicates that the address updating request message may be recognized, determine whether or not the first service supports the IPv6 address updating to obtain the first determination result.

Another embodiment of the disclosure further provides a terminal, which includes above-mentioned device for managing the IPv6 address applied to the first terminal.

Another embodiment of the disclosure further provides a terminal, which includes above-mentioned device for managing the IPv6 address applied to the second terminal.

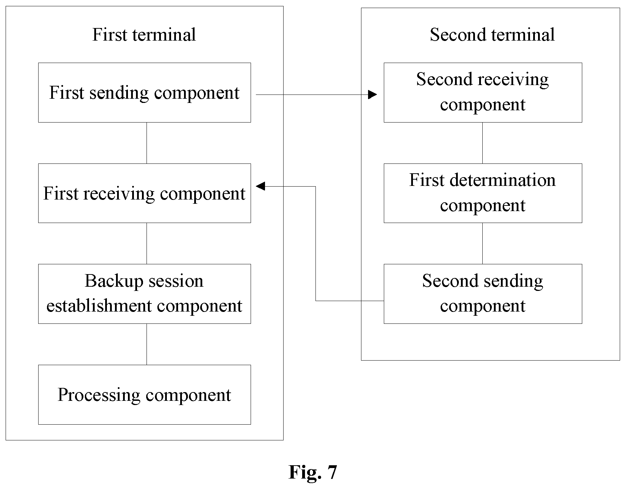

Furthermore, a schematic diagram of interaction between components of the first terminal and components of the second terminal is shown in Fig. 7.

Those skilled in the art should know that all or part of the steps of the above-mentioned embodiments may be implemented by virtue of a flow of a computer program, the computer program may be stored in a computer-readable storage medium, the computer program is executed on a corresponding hardware platform (such as a system, device, device and apparatus), and during execution, one or combination of steps of the method embodiments is included.

Alternatively, all or part of the steps of the abovementioned embodiments may also be implemented by virtue of an integrated circuit, these steps may form multiple integrated circuit components, or multiple components or steps therein may form a single integrated circuit component for implementation. Therefore, the disclosure is not limited to any specific hardware and software combination.

Each device/function component/function element in the above-mentioned embodiments may be implemented by adopting a universal computing device, and they may be concentrated on a single computing device, and may also be distributed on a network formed by multiple computing devices.

When being implemented in form of software function component and sold or used as an independent product, each device/function component/function unit in the above-mentioned embodiments may be stored in a computer-readable storage medium. The above-mentioned computer-readable storage medium may be a read-only memory, a magnetic disk, an optical disk or the like.

Any variations or replacements apparent to those skilled in the art within the technical scope of the disclosure shall fall within the scope of protection of the disclosure. Therefore, the scope of protection of the disclosure should be subject to the scope of protection of the claims.

### Industrial Applicability

According to the embodiments of the disclosure, user service continuity after IPv6 hopping is achieved, security and availability of an IPv6 network are improved, and a positive effect on acceleration of IPv6 network deployment is achieved.

## Claims

1. A method for managing an Internet Protocol version 6 (IPv6) address, applied to a first terminal, the method comprising:
when a first service has yet not ended before an original lifetime of a first IPv6 address terminates, sending, by the first terminal, an address updating request message for querying about whether or not the first service supports IPv6 address updating to a second terminal, wherein the first service is a service which is currently executed by the first terminal and the second terminal, and the first IPv6 address is an IPv6 address adopted for the first service which is currently executed by the first terminal;
receiving, by the first terminal, an address updating response message returned by the second terminal, the address updating response message carrying a first determination result of a determination of the second terminal about whether or not the first service supports IPv6 address updating;
when the first determination result carried in the address updating response message indicates that the first service supports IPv6 address updating, requesting, by the first terminal, to establish a backup session for the first service with the second terminal by virtue of a second IPv6 address, which is pre-stored; and
in the case that the first service has yet not ended when the original lifetime of the first IPv6 address terminates, continuing executing, by the first terminal, the first service with the second terminal by virtue of the backup session.

2. The method as claimed in claim 1, wherein the first IPv6 address is at least one of a 128-bit IPv6 address and a 64-bit IPv6 address prefix.

3. The method as claimed in claim 1, wherein sending, by the first terminal, the address updating request message for querying about whether or not the first service supports the IPv6 address updating to the second terminal comprises:
sending, by the first terminal, the address updating request message to the second terminal through an IPv6 extension header.

4. The method as claimed in claim 1, wherein the address updating request message carries at least one of an IPv6 address updating capability parameter of the first terminal and the second IPv6 address.

5. The method as claimed in claim 4, wherein the IPv6 address updating capability parameter comprises at least one of an IPv6 address prefix updating capability parameter and an IPv6 interface Identity (ID) updating capability parameter.

6. A method for managing an Internet Protocol version 6 (IPv6) address, applied to a second terminal, the method comprising:
receiving an address updating request message for querying about whether or not a first service supports IPv6 address updating from a first terminal, wherein the first service is a service which is currently executed by the first terminal and the second terminal, the first service has yet not ended before an original lifetime of a first IPv6 address terminates, and the first IPv6 address is an IPv6 address adopted for the first service which is currently executed by the first terminal;
determining whether or not the first service supports the IPv6 address updating to obtain a first determination result; and
when the first determination result indicates that the first service supports the IPv6 address updating, returning an address updating response message carrying the first determination result to the first terminal so that the first terminal requests to establish a backup session for the first service with the second terminal by virtue of a second IPv6 address, which is pre-stored, and continue executing the first service with the second terminal by virtue of the backup session in the case that the first service has yet not ended when the original lifetime of the first IPv6 address terminates.

7. The method as claimed in claim 6, further comprising:
determining, by the second terminal, whether or not the address updating request message is recognized to obtain a second determination result, and
determining whether or not the first service supports the IPv6 address updating to obtain the first determination result comprises:
when the second determination result indicates that the address updating request message is recognized, determining whether or not the first service supports the IPv6 address updating to obtain the first determination result.

8. A device for managing an Internet Protocol version 6 (IPv6) address, applied to a first terminal, the device comprising:
a first sending component, arranged to, when a first service has yet not ended before an original lifetime of a first IPv6 address terminates, send an address updating request message for querying about whether or not the first service supports IPv6 address updating to a second terminal, wherein the first service is a service which is currently executed by the first terminal and the second terminal, and the first IPv6 address is an IPv6 address adopted for the first service which is currently executed by the first terminal;
a first receiving component, arranged to receive an address updating response message returned by the second terminal, the address updating response message carrying a first determination result of a determination of the second terminal about whether or not the first service supports IPv6 address updating;
a backup session establishment component, arranged to, when the first determination result carried in the address updating response message indicates that the first service supports IPv6 address updating, request to establish a backup session for the first service with the second terminal by virtue of a second IPv6 address, which is pre-stored; and
a processing component, arranged to, in the case that the first service has yet not ended when the original lifetime of the first IPv6 address terminates, continue executing the first service with the second terminal by virtue of the backup session.

9. The device as claimed in claim 8, wherein the first IPv6 address is at least one of a 128-bit IPv6 address and a 64-bit IPv6 address prefix.

10. The device as claimed in claim 8, wherein the first sending component comprises:
a first sending sub-component, arranged to send the address updating request message to the second terminal through an IPv6 extension header.

11. The device as claimed in claim 8, wherein the address updating request message carries at least one of an IPv6 address updating capability parameter of the first terminal and the second IPv6 address.

12. The device as claimed in claim 11, wherein the IPv6 address updating capability parameter comprises at least one of an IPv6 address prefix updating capability parameter and an IPv6 interface Identity (ID) updating capability parameter.

13. A device for managing an Internet Protocol version 6 (IPv6) address, applied to a second terminal, the device comprising:
a second receiving component, arranged to receive an address updating request message for querying about whether or not a first service supports IPv6 address updating from a first terminal, wherein the first service is a service which is currently executed by the first terminal and the second terminal, the first service has yet not ended before an original lifetime of a first IPv6 address terminates, and the first IPv6 address is an IPv6 address adopted for the first service which is currently executed by the first terminal;
a first determination component, arranged to judge whether or not the first service supports the IPv6 address updating to obtain a first determination result; and
a second sending component, arranged to, when the first determination result indicates that the first service supports the IPv6 address updating, return an address updating response message carrying the first determination result to the first terminal so that the first terminal requests to establish a backup session for the first service with the second terminal by virtue of a second IPv6 address, which is pre-stored, and continue executing the first service with the second terminal by virtue of the backup session in the case that the first service has yet not ended when the original lifetime of the first IPv6 address terminates.

14. The device as claimed in claim 13, further comprising:
a second determination component, arranged to judge whether or not the address updating request message is recognized to obtain a second determination result, and
the first determination component is arranged to:
when the second determination result indicates that the address updating request message is recognized, determine whether or not the first service supports the IPv6 address updating to obtain the first determination result.

15. A terminal, comprising the device for managing the Internet Protocol version 6 (IPv6) address as claimed in any one of claims 8-12.

16. A terminal, comprising the device for managing the Internet Protocol version 6 (IPv6) address as claimed in claim 13 or 14.

17. A computer program, comprising a program instruction, the program instruction being executed by a terminal to cause a computer to execute the method as claimed in any one of claims 1-7.

18. A computer-readable storage medium carrying the computer program as claimed in claim 17.
